# EUROPEAN PATENT SPECIFICATION

(11) **EP 3 132 257 B1**
(45) Date of publication and mention of the grant of the patent: **14.08.2024**
(21) Application number: 15715218.2
(22) Date of filing: 02.04.2015
(51) Int. Cl.: G01N 29/07, G01B 17/00, G01N 29/26, G01N 29/30

(54) **ULTRASOUND GEOMETRY VALIDATION WITH CORRECTION OF POSITIONING INACCURACY OF THE TRANSDUCER**
VALIDIERUNG EINER ULTRASCHALLGEOMETRIE MIT KORREKTUR DER POSITIONIERUNGSUNGENAUIGKEIT DES WANDLERS
VALIDATION DE GÉOMÉTRIE PAR ULTRASONS AVEC CORRECTION D'IMPRÉCISION DE POSITIONNEMENT DU TRANSDUCTEUR

(30) Priority: 14.04.2014 DE 102014105308
(43) Date of publication of application: 22.02.2017
(73) Proprietor: Baker Hughes Digital Solutions GmbH, 50354 Hürth (DE)
(72) Inventor: PRAUSE, Reinhard, 50354 Huerth (DE); PEIP, Robert, 50354 Huerth (DE); STEINHOFF, Norbert, 50354 Huerth (DE)
(74) Representative: Novagraaf Group
(86) International application number: PCT/EP2015/057378
(87) International publication number: WO 2015/158560

(56) References cited:
- GB-A- 2 071 849
- US-A- 3 554 014
- US-A- 4 095 475
- US-A- 5 156 636
- US-A1- 2004 255 677
- US-A1- 2009 178 465
- US-A1- 2011 132 067

## Description

The present invention relates to a method for determining an unknown dimension/geometry of a test object by means of ultrasonic testing, using the echo transit time method in particular, wherein a plurality of dimensions or geometries is determined while changing the sound radiation site/measuring position. When measuring geometries from different measuring positions, the accuracy of the measurement depends on the positioning accuracy of the respective ultrasound generating transducer. The accuracy of the arrangement of an ultrasonic transducer and/or the knowledge of exact distance between the ultrasonic transducer and a reference value is crucial for an accurate assessment of the geometry of a test object. The mechanical alignment, the positioning of individual ultrasonic transducers, as well as the manufacturing of ultrasonic probes and ultrasonic transducers arranged therein, are subject to limitations in terms of precision. US 2011/132067 A1 discloses the application of acoustic V-path correction data in a method for measuring the thickness of a test object by means of a probe comprising two ultrasonic transducers.

US 2004/255677 A1 discloses ultrasound measuring of cylindrical test specimens by means of two ultrasonic transducers facing each other; in a calibration step, a reference mandrel having a known diameter is used for calculating the distance between the oppositely arranged transducers.

US 5 156 636 A discloses ultrasonic measuring of the outside and inner diameters of a tubular object by means of at least a diametrically opposed pair of transducers mounted externally about the circumference of said object.

This problem arises in particular when the transducer is moved relative to the measurement object, but also when the sound radiation site is changed, for example, by selectively actuating single or multiple groups of transducers of a phased array. Especially with such phased arrays, two problems occur after their production: Firstly, a sufficiently precise arrangement in a shared location of all the transducers and/or their sound radiating surfaces cannot be guaranteed, and secondly, the shared location surface of the transducers is not strictly parallel to the test object surface to be ultrasonically tested.

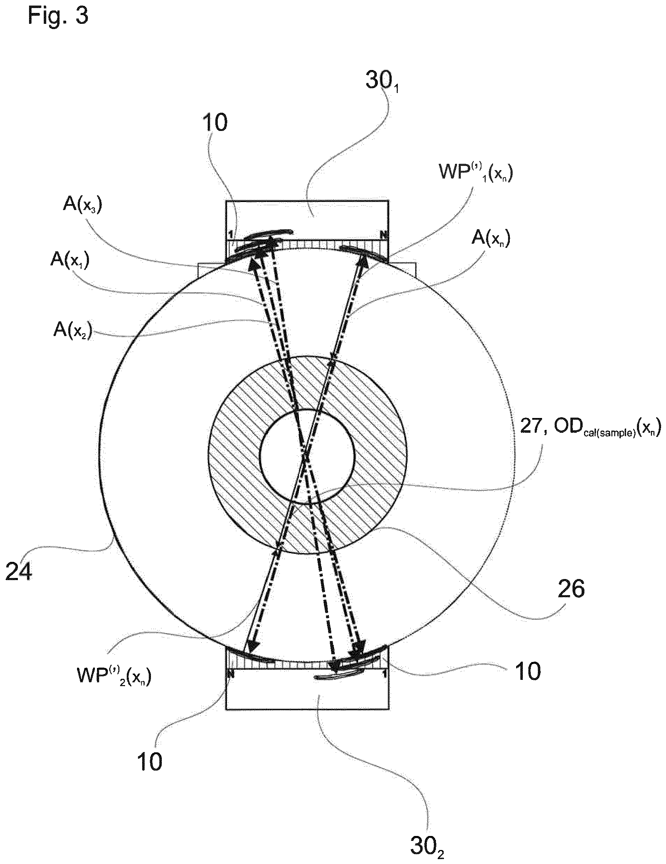

Against this background, the present invention has the object to present a method for ultrasonic geometry testing, in which the geometry is measured with improved precision. This object is achieved by a method having the features of claim 1. Further advantages and features of the invention will become apparent from the sub-claims. The description characterizes and specifies the invention, in combination with figure 3.

The invention relates to a method for ultrasonic geometry testing of a rotationally symmetric test object at several measuring positions distributed along a surface of a test object, by means of at least two ultrasonic transducers diametrically facing each other, involving the following steps:
In a first step of the method, known as calibration device deployment phase, a calibration device with at least one known dimension is provided.

In several subsequent steps of calibration, collectively known as calibrating phase, at measuring positions located on a circumference around the calibration device during each of which a measuring position specific distance between the calibration device and the ultrasonic transducer is determined and recorded with an ultrasonic transit time method, and by means of at least one echo on at least one surface of the calibration device, using the measuring position specific distance and the known dimension to calculate a stretch of movement between the ultrasonic transducers for each measuring position. The distance is stored, for example, in a non-volatile memory.

In a subsequent step, known as test object deployment phase, a test object with unknown dimension(s) is provided for measurement, taking into account the measuring positions.

In several subsequent steps, known as measuring steps, of the ultrasonic transit time measurement procedure, transit time measurements are carried out on the test object at the various measuring positions corresponding to those of the calibrating steps so that the stretch of movement does not change by means of at least one echo on at least one surface of the test object.

In at least one subsequent or intermediate evaluation step, an outer diameter of the test object is calculated, in particular for each measuring position, using the stored measuring position-specific distances and the stretch of movement.

The approach of the present invention allows assessment of the exact position of the sound radiation sites with the aid of a calibration device, to store this measurement specific information, and to use it when evaluating a sound radiation from the same sound radiation site. Thereby it becomes possible to obtain an accurate value for the dimension of the test object with respect to the measuring position. It is therefore clear to the skilled person that the aforementioned term "distance" is to be interpreted broadly and also comprises those dimensions and values which are clearly derived from the spatial distance defined by the calibration device, such as the measuring position-specific transit time and the like.

Two phased arrays consisting of several ultrasonic transducers are used for ultrasonic geometry testing, specifically during the calibration and test steps. The ultrasonic transducers of the phased array are selectively actuated during the calibration and test steps, to define the different measuring positions, which are equally valid for both calibration and test steps.

Preferably, the ultrasonic transducers of the phased array are not arranged on a shared surface parallel to the surface of the calibration device. In an exemplary case, the surfaces of the calibration device and the test object to be measured have a curvature and the ultrasonic transducers are arranged on a surface that follows this curvature approximately, but is not exactly parallel. The approach of the invention makes a precise adjustment of the transducer arrangement to the surface profile of the test object dispensable.

At least the test object is rotationally symmetrical, but preferably both the test object and the calibration device. In an exemplary case, the object is a tube or a rod. In an exemplary case, the eccentricity of the rotationally symmetric test object or calibration device is determined.

According to a further embodiment, the dimension established in the evaluation step can be used to determine the position of the test object in the ultrasonic device, consisting essentially of two or more ultrasonic transducers and of the means for positioning and, where applicable, of transporting ultrasonic transducer and test object or calibration device.

According to the method, an outer diameter of the test object, e.g. the maximum outer diameter, is determined during the evaluation step. According to a preferred embodiment, the measuring position specific distance is the clear distance from the ultrasound transducer to the nearest outer surface of the calibration device.

According to another embodiment, a rotating relative movement between the ultrasonic transducer and the calibration device and test object occurs intermediately or concurrently with the test and calibrating steps. The method of the invention thereby compensates the problem of positioning inaccuracy during relative rotation.

Preferably, coupling between the ultrasonic transducer and the surface of the test object is carried out by a rotating water jacket. Such a procedure and a test apparatus are disclosed in EP1332359 A1.

According to a preferred embodiment of the method, the measuring positions are arranged on a circumference around the calibration device and the test object, and preferably in uniform distribution over the circumference.

Preferably, two distances from a pair of ultrasonic transducers, which in an exemplary case are diametrically facing each other, are measured in each calibrating step and in each test step per measuring position.

Other features and advantages of the invention will become apparent from the following non-limiting description of a system design example, which further illustrates the method of the invention with reference to the relevant figures. The following schematic representations are provided:
Parts identical in function are always given the same reference number across the various figures. Therefore they are usually described only once.
Fig. 1: a representation of the variables measured and determined in a calibrating step,
Fig. 2: a representation of the variables measured and determined in a calibrating step with a phased array.

Parts identical in function are always given the same reference number across the various figures. Therefore they are usually described only once.

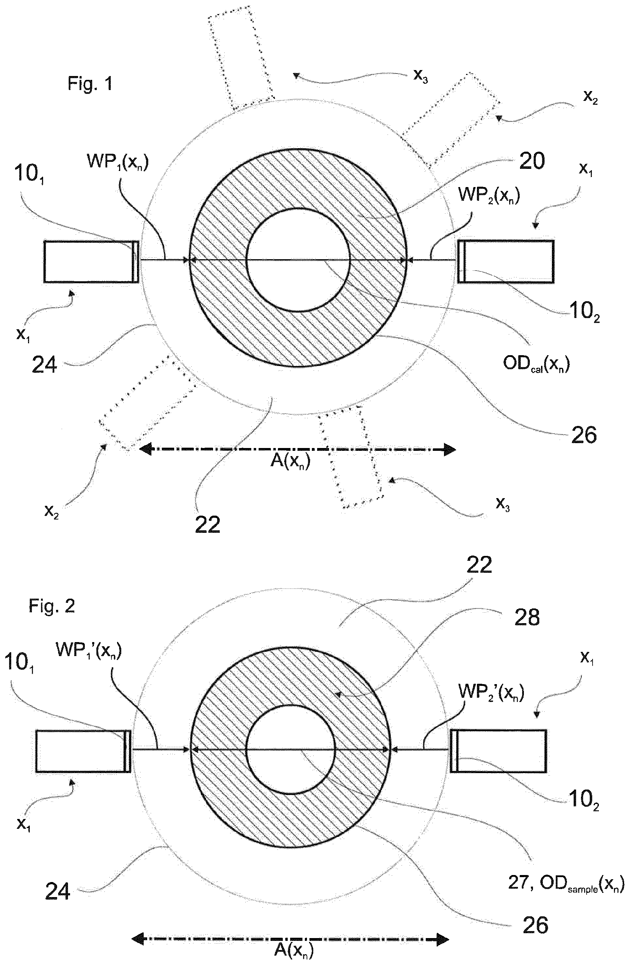

Fig. 1 shows an arrangement not falling within the scope of the present invention of two ultrasonic transducers 10₁, 10₂, and a rotationally symmetrical calibration device 20, which are designed to carry out the calibrating steps according to a first design example of the method. The coupling between the ultrasonic transducers 10₁, 10₂ and the calibration device 20 is carried out by a rotating water jacket 22.

The method is designed to perform the calibrating steps at several different measuring positions xₙ, located on a circumference 24 around the calibration device 20. The index "n" is used for numbering the different measuring positions xₙ and can take values between 1, 2, 3, ... n. In an exemplary case, three measuring positions x₁, x₂ and x₃ are defined on a circumference 24 around the calibration device 20. The two ultrasonic transducers 10₁, 10₂, the indexes each relate to a first and a second ultrasonic transducer 10₁, 10₂, which are used in a step of the process, are diametrically facing each other and are located on their measuring position x₁.

For the measuring position x₁ in each case a distance WP₁(x₁) and WP₂(x₁) of the first and second ultrasonic transducer 10₁, 10₂ to a surface 26 is determined and stored, in this case to an outer surface of the calibration device 20. In the first design example shown, the calibration device 20 is a tube with an outer diameter OD_{cal}(xₙ) known and identical for each measuring position xₙ (outer diameter calibration).

By means of the outer diameter OD_{cal}(xₙ) it is possible to calculate and store the stretch of movement Axₙ between the ultrasonic transducers for each measuring position xₙ. The measuring position follows from the known outer diameter OD_{cal}(xₙ), and the two distances WP1(xₙ) and WP2(xₙ), with Axₙ= OD_{cal}(xₙ)+( WP1(xₙ) + WP2(xₙ)).

As the stretch of movement Axₙ between the ultrasonic transducers 10₁, 10₂ does not change from the calibrating steps to the test steps, a dimension 27 of a test object 28 can be calculated during the test steps by identifying the measuring position specific distances WP₁'(xₙ) and WP₂'(xₙ).

Fig. 2 illustrates which variables are determined to calculate dimension 27 of the test object 28. In the example shown, the arrangement corresponds to the one known from Fig. 1, whereby the test object 28 is positioned at the location of the calibration device 20. Test object 28 is a tube with an unknown outside diameter ODₛₐₘₚₗₑ(xₙ), whereby, specific to the measuring position, dimension 27 of the unknown diameter ODₛₐₘₚₗₑ(xₙ) of the test object is determined.

In the course of test steps, by transit time measurements on a surface 26, in this case the outer surface of the test object 28, the measuring position specific distances WP1'(xₙ) and WP₂'(xₙ) of the ultrasonic transducers 10₁, 10₂ are determined. The measurements are carried out at the measuring positions xₙ, which correspond to the measuring positions xₙ of the calibrating steps. Since the stretch of movement Axₙ between the ultrasonic transducers 10₁, 10₂ has not changed and the distances WP₁(xₙ) and WP₂(xₙ) are stored, an outer diameter ODₛₐₘₚₗₑ(xₙ) of the test object at the measuring position xₙ can be determined, with ODₛₐₘₚₗₑ(xₙ)= OD_{cal}(xₙ)+( WP1(xₙ) + WP2(xₙ)) - (WP1'(xₙ) + WP₂'(xₙ)).

Fig. 3 shows an embodiment of an arrangement of ultrasonic transducers 10 and a calibration device 20, or a test object 28 according to the present invention. The arrangement is analogous to the one described under Fig. 1 and Fig. 2, and also the steps of the method are analogous to the steps described above. However, in the design example shown, instead of two ultrasound transducers 10₁, 10₂ two phased arrays 30₁, 30₂ are arranged on a circumference 24 around the calibration device 20 or the test object 28. The first and second phased array 30₁, 30₂, which are used during a calibrating or test step, are diametrically facing each other and each include a number 1, ..., N of selectively controllable ultrasonic transducers. By selectively actuating individual ultrasonic transducers 10 or a group of ultrasonic transducers 10, different measuring positions xₙ can be defined. In the design example shown, the surface of the calibration device 28 and of the test object 28 to be measured has a curvature and the ultrasonic transducers 10 are arranged on a surface which follows this curvature and is approximately parallel. The approach of the invention makes a precise adjustment of the ultrasound transducer arrangement to the surface of the calibration device 20 or the test object 28 dispensable.

## Claims

1. A method for ultrasonic geometry testing of a rotationally symmetric test object (28) at a plurality of different measuring positions (xₙ) distributed along a surface (26) of a test object (28), by means of two ultrasonic transducers (10) diametrically facing each other, the method involving the following steps:
a step of providing a rotationally symmetric calibration device (20) with known dimension (OD_{cal}(xₙ));
several subsequent calibrating steps at measuring positions (xₙ) located on a circumference (24) around the calibration device (20), during each of which a measuring position specific distance (WPᵢ(xₙ)) between the calibration device (20) and each ultrasonic transducer (10) is determined and recorded by an ultrasonic transit time method, by means of at least one echo on at least one surface (26) of the calibration device (20), using the measuring position specific distance (WPi(xn)) and the known dimension ((OD_{cal}(xₙ)) to calculate a stretch of movement (Axn) between the ultrasonic transducers (10) for each measuring position; (xₙ); subsequently a step of providing a test object (28);
several test steps in the ultrasonic transit time measurement on the test object (28) at measuring positions (xₙ) which correspond to those of the calibrating steps so that the stretch of movement (Axn) does not change, wherein at the plurality of measuring positions (xₙ) transit time measurements are taken by means of at least one echo on at least one surface (26) of the test object, so as to determine a measuring position specific distance (WP'ᵢ(xₙ)) between the test object and each ultrasonic transducer; and
at least one evaluation step, wherein, using the measuring position specific distances (WP'ᵢ(xₙ)) for the test object and the stretch of movement (Axn), an outer diameter (27, ODₛₐₘₚₗₑ(xₙ)) of test object (28) is calculated, in particular for each measuring position (xₙ) one dimension (27, ODₛₐₘₚₗₑ(xₙ);
wherein two phased arrays (30₁, 30₂) diametrically facing each other and each consisting of several ultrasonic transducers (10) are used for the calibrating steps and the test steps;
wherein intermediately or simultaneously with the testing and calibrating steps, a rotating relative movement is carried out between the ultrasonic transducers (10) and calibration device (20) or test object (28);
wherein, in each calibrating step, and in each test step for each measuring position (xₙ) two distances (WP1(xₙ), WP2(xₙ), WP1'(xₙ),WP₂'(xₙ)) of the pair of phased arrays (30₁, 30₂) are measured or determined; and
wherein the ultrasound transducers (10) of the phased array (30) are selectively actuated and define different measuring positions (xₙ) which are equally valid for both calibration and test steps.

2. Method according to claim 1, wherein the ultrasonic transducers (10) of the phased array (30) are not arranged on a shared surface parallel to the surface (26) of the calibration device (20) or of the test object (28).

3. Method according to any one of the preceding claims, wherein the measuring position specific distance is the clear distance of the phased array (30) to the nearest outer surface of the calibration device (20).

4. Method according to one of the preceding claims, wherein the coupling between the phased arrays (30) and the surface (26) of the test object (28) is carried out by a rotating water jacket (22).

## Patentansprüche

1. Verfahren für ein Ultraschallgeometrieprüfen eines rotationssymmetrischen Prüfobjekts (28) an einer Vielzahl von unterschiedlichen Messpositionen (xₙ), die entlang einer Oberfläche (26) eines Prüfobjekts (28) verteilt sind, mittels zweier Ultraschallwandler (10), die einander diametral zugewandt sind, wobei das Verfahren die folgenden Schritte einschließt:
einen Schritt eines Bereitstellens einer rotationssymmetrischen Kalibrierungsvorrichtung (20) mit bekannten Abmessungen (OD_{cal}(xₙ));
mehrere aufeinanderfolgende Kalibrierschritte an Messpositionen (xₙ), die sich auf einem Umfang (24) um die Kalibrierungsvorrichtung (20) herum befinden, während denen jeweils ein messpositionsspezifischer Abstand (WPᵢ(xₙ)) zwischen der Kalibrierungsvorrichtung (20) und jedem Ultraschallwandler (10) durch ein Ultraschalllaufzeitverfahren bestimmt und aufgezeichnet wird, mittels mindestens eines Echos auf mindestens einer Oberfläche (26) der Kalibrierungsvorrichtung (20) unter Verwendung des messpositionsspezifischen Abstandes (WPi(xn)) und der bekannten Abmessung ((OD_{cal}(xₙ)), um eine Bewegungsstrecke (Axn) zwischen den Ultraschallwandlern (10) für jede Messposition zu berechnen; (xₙ); anschließend
einen Schritt des Bereitstellens eines Prüfobjekts (28);
mehrere Prüfschritte bei der Ultraschalllaufzeitmessung an dem Prüfobjekt (28) an Messpositionen (xₙ), die denen der Kalibrierschritte entsprechen, sodass sich die Bewegungsstrecke (Axn) nicht ändert, wobei an der Vielzahl von Messpositionen (xₙ) Laufzeitmessungen mittels mindestens eines Echos an mindestens einer Oberfläche (26) des Prüfobjekts vorgenommen werden, um einen messpositionsspezifischen Abstand (WP'ᵢ(xₙ)) zwischen dem Prüfobjekt und jedem Ultraschallwandler zu bestimmen; und
mindestens einen Auswerteschritt, wobei unter Verwendung der messpositionsspezifischen Abstände (WP'ᵢ(xₙ)) für das Prüfobjekt und der Bewegungsstrecke (Axn) ein Außendurchmesser (27, ODₛₐₘₚₗₑ(xₙ)) des Prüfobjekts (28) berechnet wird, insbesondere für jede Messposition (xₙ) eine Abmessung (27, ODₛₐₘₚₗₑ(xₙ);
wobei für die Kalibrierschritte und die Prüfschritte zwei einander diametral zugewandte Phased Arrays (30₁, 30₂) und die jeweils aus mehreren Ultraschallwandlern (10) bestehen, verwendet werden;
wobei zwischen oder gleichzeitig mit den Prüf- und Kalibrierschritten eine rotierende Relativbewegung zwischen den Ultraschallwandlern (10) und der Kalibrierungsvorrichtung (20) oder dem Prüfobjekt (28) ausgeführt wird;
wobei in jedem Kalibrierschritt und in jedem Prüfschritt für jede Messposition (xₙ) zwei Abstände (WP1(xₙ), WP2(xₙ), WP1'(xₙ),WP₂'(xₙ)) des Paars von Phased Arrays (30₁, 30₂) gemessen oder bestimmt werden; und
wobei die Ultraschallwandler (10) des Phased Array (30) selektiv angesteuert werden und unterschiedliche Messpositionen (xₙ) definieren, die für beide Kalibrier- und Prüfschritte gleichermaßen gültig sind.

2. Verfahren nach Anspruch 1, wobei die Ultraschallwandler (10) des Phased Array (30) nicht auf einer gemeinsamen Oberfläche parallel zu der Oberfläche (26) der Kalibrierungsvorrichtung (20) oder des Prüfobjekts (28) angeordnet sind.

3. Verfahren nach einem der vorstehenden Ansprüche, wobei der messpositionsspezifische Abstand der klare Abstand des Phased Array (30) zu der nächstgelegenen Außenoberfläche der Kalibrierungsvorrichtung (20) ist.

4. Verfahren nach einem der vorstehenden Ansprüche, wobei die Kopplung zwischen den Phased Arrays (30) und der Oberfläche (26) des Prüfobjekts (28) durch einen rotierenden Wassermantel (22) erfolgt.

## Revendications

1. Procédé d'essai de géométrie aux ultrasons d'un objet d'essai (28) symétrique en rotation au niveau d'une pluralité de positions de mesure différentes (xₙ) réparties le long d'une surface (26) d'un objet d'essai (28), au moyen de deux transducteurs à ultrasons (10) se faisant face diamétralement, le procédé impliquant les étapes suivantes consistant à :
une étape consistant à fournir un dispositif d'étalonnage (20) symétrique en rotation de dimension connue (OD_{cal}(xₙ)) ;
plusieurs étapes d'étalonnage ultérieures au niveau des positions de mesure (xₙ) situées sur une circonférence (24) autour du dispositif d'étalonnage (20), pendant chacune desquelles une distance spécifique de position de mesure (WPᵢ(xₙ)) entre le dispositif d'étalonnage (20) et chaque transducteur à ultrasons (10) est déterminée et enregistrée par un procédé de temps de transit d'ultrasons, au moyen d'au moins un écho sur au moins une surface (26) du dispositif d'étalonnage (20), à l'aide de la distance spécifique de position de mesure (WPi(xn)) et la dimension connue (OD_{cal}(xₙ)) afin de calculer une étendue de mouvement (Axn) entre les transducteurs à ultrasons (10) pour chaque position de mesure ; (xₙ) ; ensuite
une étape consistant à fournir un objet d'essai (28) ;
plusieurs étapes d'essai dans la mesure de temps de transit d'ultrasons sur l'objet d'essai (28) au niveau des positions de mesure (xₙ) qui correspondent à celles des étapes d'étalonnage de sorte que l'étendue de mouvement (Axn) ne change pas, dans lequel, au niveau de la pluralité de positions de mesure (xₙ), des mesures de temps de transit sont effectuées au moyen d'au moins un écho sur au moins une surface (26) de l'objet d'essai, de manière à déterminer une distance spécifique de position de mesure (WP'ᵢ(xₙ)) entre l'objet d'essai et chaque transducteur à ultrasons ; et
au moins une étape d'évaluation, dans lequel, à l'aide des distances spécifiques de position de mesure (WP'ᵢ(xₙ)) pour l'objet d'essai et de l'étendue de mouvement (Axn), un diamètre extérieur (27, ODₛₐₘₚₗₑ(xₙ)) de l'objet d'essai (28) est calculé, en particulier pour chaque position de mesure (xₙ) une dimension (27, ODₛₐₘₚₗₑ(xₙ)) ;
dans lequel deux réseaux phasés (30₁, 30₂) se faisant face diamétralement et consistant chacun de plusieurs transducteurs à ultrasons (10) sont utilisés pour les étapes d'étalonnage et les étapes d'essai ;
dans lequel, de manière intermédiaire ou simultanée avec les étapes d'essai et d'étalonnage, un mouvement relatif rotatif est réalisé entre les transducteurs à ultrasons (10) et le dispositif d'étalonnage (20) ou l'objet d'essai (28) ;
dans lequel, à chaque étape d'étalonnage, et à chaque étape d'essai pour chaque position de mesure (xₙ), deux distances (WP1(xₙ), WP2(xₙ), WP1'(xₙ), WP₂'(xₙ)) de la paire de réseaux phasés (30₁, 30₂) sont mesurées ou déterminées ; et
dans lequel les transducteurs à ultrasons (10) du réseau phasé (30) sont actionnés sélectivement et définissent différentes positions de mesure (xₙ) qui sont également valables pour les étapes d'étalonnage et d'essai.

2. Procédé selon la revendication 1, dans lequel les transducteurs à ultrasons (10) du réseau phasé (30) ne sont pas disposés sur une surface partagée parallèle à la surface (26) du dispositif d'étalonnage (20) ou de l'objet d'essai (28).

3. Procédé selon l'une quelconque des revendications précédentes, dans lequel la distance spécifique de position de mesure est la distance libre du réseau phasé (30) par rapport à la surface extérieure la plus proche du dispositif d'étalonnage (20).

4. Procédé selon l'une quelconque des revendications précédentes, dans lequel l'accouplement entre les réseaux phasés (30) et la surface (26) de l'objet d'essai (28) est réalisé par une chemise d'eau rotative (22).
